# EUROPEAN PATENT APPLICATION

(11) **EP 3 668 076 A1**
(43) Date of publication of application: **17.06.2020**
(21) Application number: 19215196.7
(22) Date of filing: 11.12.2019
(51) Int. Cl.: H04N 1/00, G06F 3/12

(54) **IMAGE FORMING APPARATUS AND HOME SCREEN DISPLAY PROGRAM**

(30) Priority: 12.12.2018 JP 2018233012
(71) Applicant: KYOCERA Document Solutions Inc., Osaka-shi, Osaka 540-8585 (JP)
(72) Inventor: YOSHIMOTO, Hiroshi, Osaka-shi, Osaka 540-8585 (JP)
(74) Representative: Viering, Jentschura & Partner mbB Patent- und Rechtsanwälte

(57) **Abstract**

A Multifunction Peripheral (MFP) (10) includes a plurality of applications (18g, 18i), standard application information (18h) and extension application information (18j) that includes a function executed when an application among the plurality of applications is executed, and corresponding function information (18k) indicating the function corresponding to the state of the MFP, and does not include in a preview combination home screen (20) an icon (21) corresponding to an application shown in the standard application information and the extension application information which indicate that a function other than the function associated with the current state of the MFP in the corresponding function information is executed (S172 and S181).

## Description

### Technical Field

The present disclosure relates to an image forming apparatus that displays a home screen and a home screen display program.

### Background Art

Conventionally, as an image forming apparatus that displays a home screen, there has been known an image forming apparatus which includes an operation panel that displays information, a scanner that reads an image from a document, and a printer that can print an image such as an image read from the document by the scanner on a recording medium. When the image forming apparatus reads an image from a document with the scanner, the image forming apparatus displays on the operation panel the home screen including an icon for executing processing related to image reading by the scanner, such as copy processing for printing an image read by the scanner and processing for sending an image read by the scanner.

The conventional image forming apparatus includes the icon for executing processing related to image reading by the scanner on the home screen. Therefore, in the conventional image forming apparatus, usability is taken into consideration regarding execution of processing using the image read from the document by the scanner. However, in the conventional image forming apparatus, the usability is not taken into consideration regarding the execution of processing other than the processing using the image read from the document by the scanner. Therefore, in the conventional image forming apparatus, there is a problem that the usability is not fully taken into consideration regarding the execution of processing using the image read from the document by the scanner.

### SUMMARY OF INVENTION

Therefore, the present disclosure aims to provide an image forming apparatus and a non-temporary computer-readable recording medium for storing a home screen display program that can improve the usability of the home screen.

An image forming apparatus of the present disclosure includes a display device that displays information, a plurality of applications, application information that includes, a plurality of functions each executed when the applications is executed, corresponding function information that indicates the function corresponding to a state of the image forming apparatus, and a home screen display unit that displays a home screen including an icon for executing the plurality of applications on the display device, and the home screen display unit does not comprise in the home screen the icon corresponding to the application among the plurality of applications shown in the application information which indicates that a function among the plurality of functions other than the function among the plurality of functions associated with a current state of the image forming apparatus in the corresponding function information is executed.

With this configuration, the image forming apparatus according to the present disclosure does not include in the home screen the icon corresponding to the application shown in the application information which indicates that a function other than the function associated with the current state of the image forming apparatus in the corresponding function information is executed. Therefore, the image forming apparatus of the present disclosure can exclude an icon that is expected to be used infrequently because of inappropriateness to the current state of the image forming apparatus from the home screen, and can improve the usability of the home screen.

According to the image forming apparatus of the present disclosure, the application information may include a plurality of settings each of which is applied when the function among the plurality of functions is executed, the image forming apparatus further may include non-application setting information that indicates a setting among the plurality of settings that is not applied in a specific execution state of processing by the image forming apparatus for each execution state of processing by the image forming apparatus, and the home screen display unit does not necessarily include in the home screen the icon corresponding to the application shown in the application information which indicates that the setting among the plurality of settings associated with a current execution state of the processing by the image forming apparatus in the non-application setting information is applied.

With this configuration, the image forming apparatus of the present disclosure does not include in the home screen the icon corresponding to the application shown in the application information which indicates that the setting associated with the current execution state of the processing by the image forming apparatus in the non-applicable setting information is applied. Therefore, the image forming apparatus of the present disclosure can exclude an icon that is expected to be used infrequently due to inappropriateness to the current execution state of the processing by the image forming apparatus from the home screen, and can improve the usability of the screen.

According to the image forming apparatus of the present disclosure, the application information may include a plurality of settings each of which is applied when the function among the plurality of functions is executed, the image forming apparatus further may include prohibition setting information that indicates prohibition setting as the settings prohibited, and the home screen display unit does not necessarily include in the home screen the icon corresponding to the application shown in the application information which indicates that the prohibition setting indicated in the prohibition setting information is applied.

With this configuration, the image forming apparatus of the present disclosure does not include in the home screen the icon corresponding to the application shown in the application information which indicates that the prohibition setting indicated in the prohibition setting information is applied. Therefore, the image forming apparatus of the present disclosure can exclude an unusable application icon from the home screen, and can improve the usability of the home screen.

According to the image forming apparatus of the present disclosure, the application information may include a plurality of settings each of which is applied when the plurality of functions is executed for each of the applications, each of the plurality of settings may include a destination that is applied when a transmission function as one of the plurality of functions is executed, and the home screen display unit preferentially may include in the home screen the icon corresponding to the application shown in the application information which indicates that the destination whose transmission frequency is higher than a specific transmission frequency is applied, over the icon corresponding to the application shown in the application information which indicates that the destination whose transmission frequency is less than or equal to the specific transmission frequency is applied.

With this configuration, the image forming apparatus of the present disclosure preferentially includes in the home screen the icon corresponding to the application shown in the application information which indicates that the destination whose transmission frequency is higher than the specific transmission frequency is applied, over the icon corresponding to the application in the application information which indicates that the destination whose transmission frequency is less than the specific transmission frequency is applied. Therefore, the image forming apparatus of the present disclosure can preferentially include in the home screen the icon which is expected to be frequently used, and can improve the usability of the home screen.

According to the image forming apparatus of the present disclosure, the plurality of applications may include a standard application as the application that executes at least one of the plurality of functions, and an extension application as the application that extends at least one of the plurality of functions, and the home screen display unit may include the icon corresponding to the extension application in the home screen with priority over the icon corresponding to the standard application.

With this configuration, the image forming apparatus of the present disclosure includes the icon corresponding to the extension application in the home screen with priority over the icon corresponding to the standard application. Therefore, the image forming apparatus of the present disclosure can preferentially include in the home screen the icon that is expected to be used frequently, and can improve the usability of the home screen.

According to the image forming apparatus of the present disclosure, the image forming apparatus may include corresponding application information that indicates at least one application among the plurality of applications corresponding to a type of a document, and the home screen display unit may identify the type of document to be processed, and preferentially include in the home screen the icon corresponding to the at least one application among the plurality of applications associated with the identified type in the corresponding application information.

With this configuration, the image forming apparatus of the present disclosure specifies the type of the document to be processed, and preferentially includes in the home screen the icon corresponding to the application associated with the specified type in the corresponding application information. Therefore, the image forming apparatus of the present disclosure can preferentially include in the home screen the icon that is expected to be used frequently because of high conformity to the type of the document to be processed, and can improve the usability of the home screen.

According to the image forming apparatus of the present disclosure, the home screen display unit preferentially may include in the home screen the icon corresponding to the application whose execution frequency is higher than a specific execution frequency with priority over the icon corresponding to the application whose execution frequency is equal to or lower than the specific execution frequency, among the applications associated with the identified type in the corresponding application information.

With this configuration, the image forming apparatus of the present disclosure specifies the type of the document to be processed, and preferentially includes in the home screen the icon corresponding to the application whose execution frequency is higher than the specific execution frequency, over the icon corresponding to the application whose execution frequency is less than thee specific execution frequency, among the applications associated with the identified type in the corresponding application information. Therefore, the image forming apparatus of the present disclosure can preferentially include in the home screen the icon which is expected to be frequently used, and can improve the usability of the home screen.

A home screen display program executed by an image forming apparatus, the image forming apparatus includes a display device that displays information, and a plurality of applications, the image forming apparatus includes application information that includes a plurality of functions each executed when the plurality of applications is executed, and corresponding function information that indicates a function corresponding to a state of the image forming apparatus, the home screen display program realizes in the image forming apparatus a home screen display unit that displays a home screen including an icon for executing an application on the display device, and the home screen display unit does not includes in the home screen the icon corresponding to the application among the plurality of applications shown in the application information which indicates that a function among the plurality of functions other than the function among the plurality of functions associated with a current state of the image forming apparatus in the corresponding function information is executed.

With this configuration, the image forming apparatus for executing the home screen display program of the present disclosure does not include in the home screen the icon corresponding to the application shown in the application information which indicates that a function other than the function associated with the current state of the image forming apparatus in the corresponding function information is executed. Therefore, the image forming apparatus of the present disclosure can exclude the icon that is expected to be used infrequently because of inappropriateness to the current state of the image forming apparatus from the home screen, and can improve the usability of the home screen.

### Effect

The image forming apparatus and the home screen display program of the present disclosure can improve the usability of the home screen.

### BRIEF DESCRIPTION OF THE DRAWINGS

FIG. 1 is a block diagram of a multifunction peripheral (MFP) according to an embodiment of the present disclosure;
FIG. 2 is a diagram showing an example of a home screen displayed on a display unit shown in FIG. 1;
FIG. 3 is a diagram showing an example of standard application information shown in FIG. 1;
FIG. 4 is a diagram showing an example of corresponding function information shown in FIG. 1;
FIG. 5 is a diagram showing an example of non-application setting information shown in FIG. 1;
FIG. 6 is a flowchart of an operation of the MFP shown in FIG. 1 when extension application information is updated;
FIG. 7 is a flowchart of an operation of the MFP when changing to whether the authentication function is valid or invalid;
FIG. 8 is a flowchart of an operation of the MFP shown in FIG. 1 when a user logs in;
FIG. 9 is a diagram showing an example of a login screen displayed on the display unit shown in FIG. 1;
FIG. 10 is a flowchart of an operation of the MFP shown in FIG. 1 for displaying the home screen on the display unit when the authentication function is valid and the user has logged in;
FIG. 11 shows a flowchart of an operation of the MFP shown in FIG. 1 for determining the icons to be included in a preview combination home screen including a preview of an image based on data that exists in an external storage medium when the user has logged in;
FIG. 12 is a flowchart of an operation of the MFP shown in FIG. 1 for determining the icons to be included in a normal home screen when the user has logged in and an external storage medium is connected to a connection interface;
FIG. 13 is a flowchart of an operation of the MFP shown in FIG. 1 for determining the icons to be included in the preview combination home screen including a preview of an image read by a scanner when the user has logged in;
FIG. 14 is a flowchart of an operation of the MFP shown in FIG. 1 for determining the icons to be included in the normal home screen when the user has logged in and a document is set in the scanner;
FIG. 15 is a flowchart of an operation of the MFP shown in FIG. 1 for determining the icons to be included in the preview combination home screen including a preview of an image based on private print data that exists in a document box of a user who has logged in when the user has logged in;
FIG. 16 is a flowchart of an operation of the MFP shown in FIG. 1 for displaying the home screen on the display unit when the authentication function is not valid;
FIG. 17 is a flowchart of an operation of the MFP shown in FIG. 1 for determining the icons to be included in the preview combination home screen including a preview of an image based on data that exists in the external storage medium when the authentication function is not valid;
FIG. 18 is a flowchart of an operation of the MFP shown in FIG. 1 for determining the icons to be included in the normal home screen when the authentication function is not valid and the external storage medium is connected to the connection interface;
FIG. 19 is a flowchart of an operation of the MFP shown in FIG. 1 for determining the icons to be included in the preview combination home screen including a preview of an image read by the scanner when the authentication function is not valid;
FIG. 20 is a flowchart of an operation of the MFP shown in FIG. 1 for determining the icons to be included in the normal home screen when the authentication function is not valid and a document is set in the scanner;
FIG. 21 is a flowchart of a variation of the operation shown in FIG. 10; and
FIG. 22 is a flowchart of a variation of the operation shown in FIG. 16.

### DESCRIPTION OF THE PREFERRED EMBODIMENTS

Hereinafter, embodiments of the present disclosure will be described with reference to the drawings.

First, the configuration of a Multifunction Peripheral (MFP) as an image forming apparatus according to an embodiment of the present disclosure will be described.

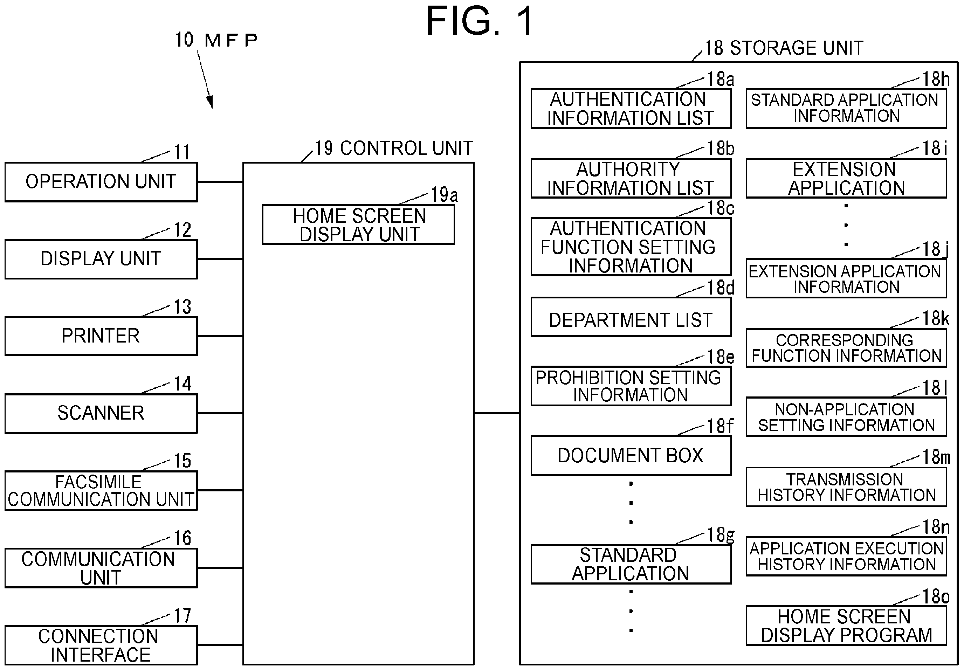

FIG. 1 is a block diagram of the MFP 10 according to the present embodiment.

As shown in FIG. 1, the MFP 10 includes an operation unit 11 that is an input device such as a button for inputting various operations, a display unit 12 that is a display device such as a liquid crystal display (LCD) for displaying various information, and a printer 13 that is a printing device for printing images on a recording medium such as paper. The MFP 10 further includes a scanner 14, which is a reading device that reads an image from a document, a facsimile communication unit 15 which is a facsimile device that performs facsimile communication with an external facsimile device (not shown) via a communication line such as a public telephone line, and a communication unit 16, which is a communication device that communicates with an external device via a network such as a local area network (LAN) and an Internet, or directly via wired or wireless without intervening the network. The MFP 10 further includes a connection interface 17 such as universal serial bus (USB) port to which an external storage medium such as USB memory is connected, a storage unit 18 that is a non-volatile storage device such as a semiconductor memory or a hard disk drive (HDD) that stores various types of information, and a control unit 19 that controls the entire MFP 10.

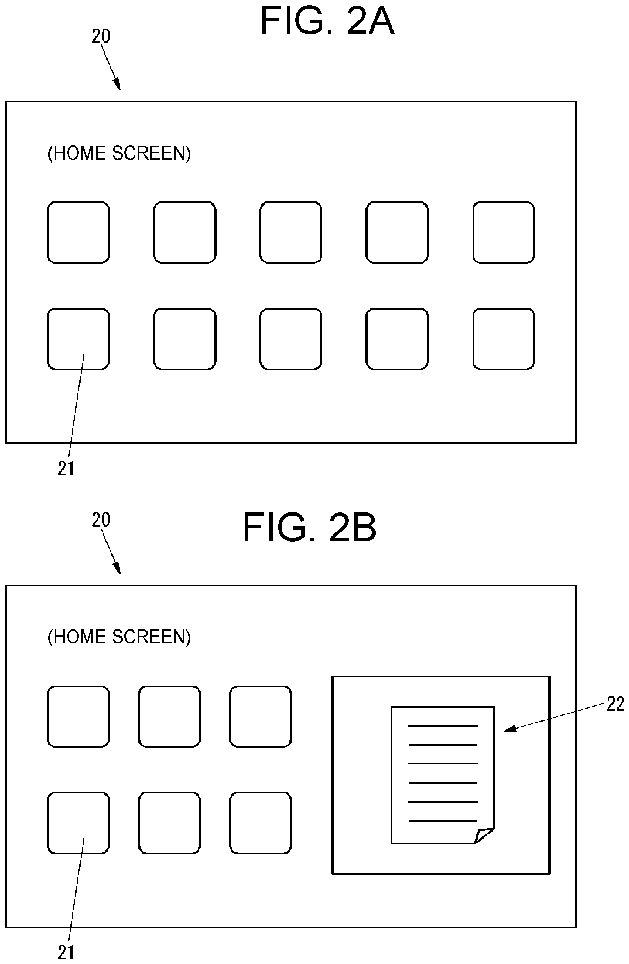

FIG. 2 is a diagram showing an example of a home screen 20 displayed on the display unit 12.

The home screen 20 in FIG. 2 is a basic screen for the operation of the MFP 10. The home screen 20 includes an icon 21 for executing an application. In addition to the icon 21, the home screen 20 includes icons each having the same configuration as the icon 21 for each process. The home screen 20 includes a normal home screen that does not include a preview of an image based on data printable by the printer 13 (hereinafter referred to as a "normal home screen"), as shown in FIG. 2A, and a home screen including a preview 22 of an image based on data printable by the printer 13 (hereinafter referred to as "preview combination home screen"), as shown in FIG. 2B.

The MFP 10 shown in FIG. 1 has a function that associates data transmitted from an external computer such as a personal computer (PC) via a printer driver of the computer with the user, temporarily stores the associated data in the storage unit 18, and prints an image based on the data by the printer 13 in response to an instruction from the user via the operation unit 11 (hereinafter referred to as "private print"). The private print is a function that can prevent, for example, a printed material by the printer 13 from being taken away by a third party.

When there is data printable by the printer 13, such as image data, in the external storage medium connected to the connection interface 17, the MFP 10 can print by the printer 13 an image based on the data that exists in the external storage medium connected to the connection interface 17 and can be printed by the printer 13. In addition, the MFP 10 can store an image read from a document by the scanner 14 in the external storage medium connected to the connection interface 17.

The storage unit 18 stores an authentication information list 18a including authentication information for authenticating the user for each user. The authentication information is, for example, information that combines user identification information and user password.

The storage unit 18 stores an authority information list 18b that includes authority information indicating the authority of the user for each user. The authority includes, for example, a general user indicating that it is an ordinary user and an administrator indicating that it is an administrator of the MFP 10.

The storage unit 18 stores authentication function setting information 18c indicating whether the authentication function of the MFP 10 is valid.

The storage unit 18 stores a department list 18d including a department to which the user belongs for each user.

The storage unit 18 stores prohibition setting information 18e that indicates a setting prohibited among the settings applied when the function is executed (hereinafter referred to as "prohibition setting"), for each user and each department. The settings applied when the function is executed include, for example, the setting of "color" indicating to execute color printing by printer 13, the setting of "aggregation" indicating to execute aggregated printing by printer 13, and the setting of "double-sided" indicating executing double-sided printing by the printer 13.

The storage unit 18 includes a document box 18f, which is a storage area for storing data of a specific user. In addition to the document box 18f, the storage unit 18 includes document boxes each having the same configuration as the document box 18f for each user. The document box 18f may store data printed by a private print (hereinafter referred to as "private print data").

The storage unit 18 can store a standard application 18g for executing a function of the MFP 10. In addition to the standard application 18g, the storage unit 18 can store at least one standard application for executing a function of the MFP 10. Each standard application stored in the storage unit 18 is associated with one icon that can be displayed on the home screen. The standard application may be installed in the MFP 10 at the MFP 10 manufacturing stage, additionally installed in the MFP 10 from an external storage medium such as USB memory, and additionally installed in the MFP 10 from the network.

The storage unit 18 stores standard application information 18h as application information of the standard application.

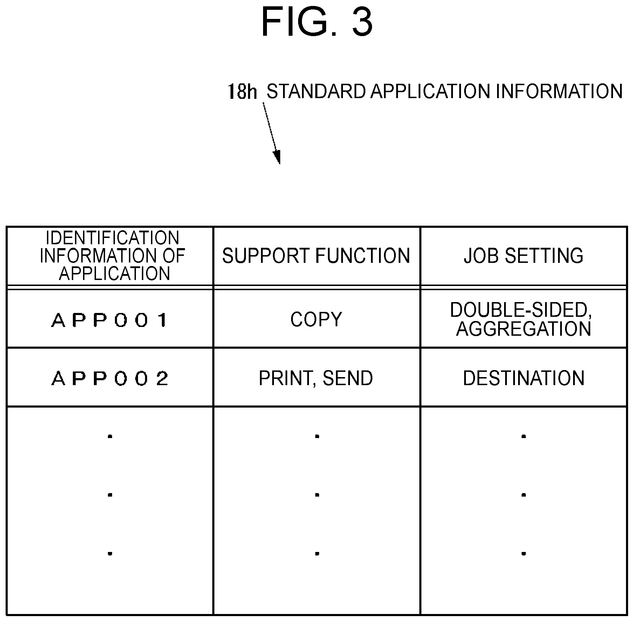

FIG. 3 is a diagram showing an example of the standard application information 18h.

As shown in FIG. 3, the standard application information 18h is information that includes a function that is executed when the application is executed (hereinafter referred to as "support function") and a setting that is applied when the support function is executed (hereinafter referred to as "job setting") for each standard application. The support function includes, for example, "copy" which prints an image read by the scanner 14 by the printer 13, "print" which prints by the printer 13, "send" which sends the image read by the scanner 14 to a specific destination, and "document box" that stores the image read by the scanner 14 and data stored in an external storage medium connected to the connection interface 17 in the document box. The job setting includes, for example, the setting of "destination" that is applied when the "send" function is executed, the setting of "color", the setting of "aggregation", and the setting of "double-sided".

As shown in FIG. 1, the storage unit 18 can store an extension application 18i for extending the functions of the MFP 10. In addition to the extension application 18i, the storage unit 18 can store at least one extension application for extending the functions of the MFP 10. The extension application can improve the efficiency of the user's work, for example, by defining an arbitrary workflow, such as a workflow sending to a specific destination by aggregating two in one. Each of the extension applications stored in the storage unit 18 is associated with one icon that can be displayed on the home screen. The extension application may be installed in the MFP 10 at the MFP 10 manufacturing stage, additionally installed in the MFP 10 from an external storage medium such as USB memory, and additionally installed in the MFP 10 from the network.

The storage unit 18 stores extension application information 18j as application information of the extension application. The extension application information 18j is information that includes the support function and the job setting for each extension application, in the same way as the standard application information 18h. The support function includes, for example, "copy", "print", "send", and "document box". The job setting includes, for example, the setting of "destination" that is applied when the function of "send" is executed, the setting of the "color", the setting of "aggregation", and the setting of "double-sided".

The storage unit 18 stores corresponding function information 18k indicating the function of the MFP 10 corresponding to the state of the MFP 10.

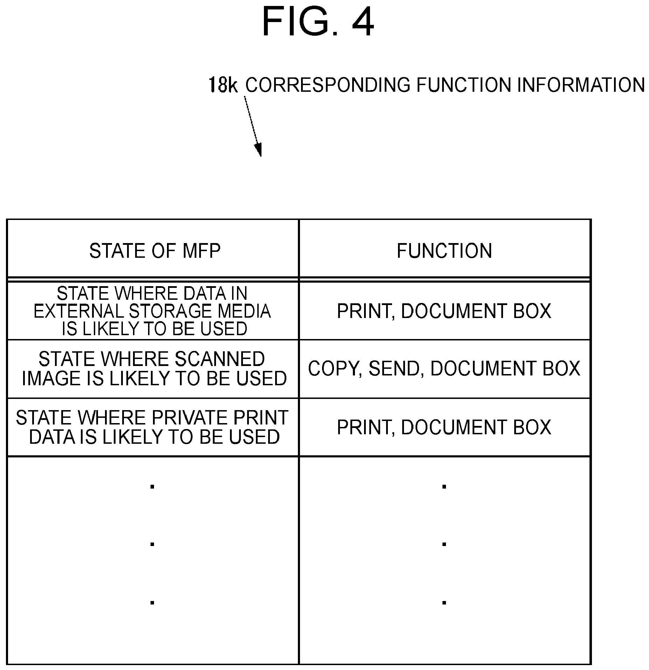

FIG. 4 is a diagram showing an example of the corresponding function information 18k.

As shown in FIG. 4, the corresponding function information 18k indicates the function of the MFP 10 for each of a state where the data that exists in the external storage medium connected to the connection interface 17 is likely to be used (hereinafter referred to as "state where data in external storage medium is likely to be used"), a state where the image read by the scanner 14 is likely to be used (hereinafter referred to as "state where scanned image is likely to be used"), and a state where the private print data that exists in the document box is likely to be used (hereinafter referred to as "state where private print data is likely to be used"). For example, the corresponding function information 18k shown in FIG. 4 shows "print" and "document box" for the state where data in external storage medium is likely to be used and the state where private print data is likely to be used, and "copy", "send", and "document box" for the state where scanned image is likely to be used.

As shown in FIG. 1, the storage unit 18 stores the setting that is not applied in a specific execution state of processing by the MFP 10 among the settings applied when executing the functions of the MFP 10, as non-application setting information 181 indicating for each specific execution state of processing by the MFP 10.

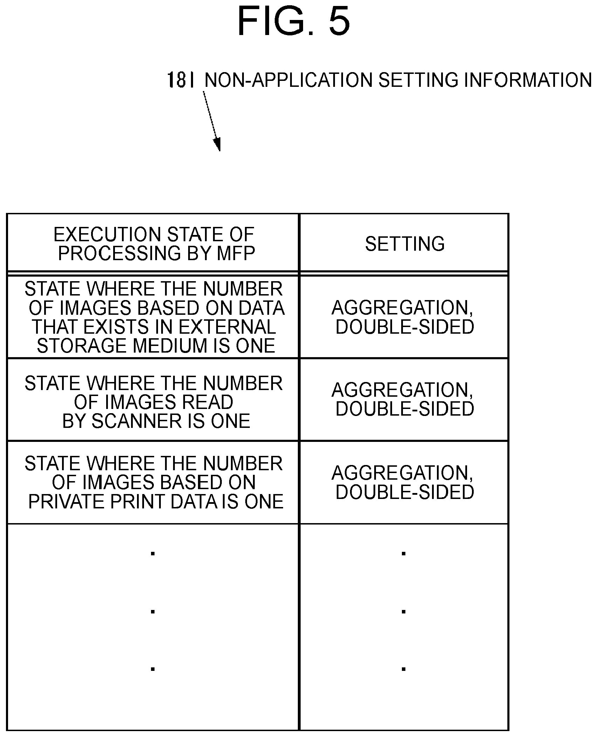

FIG. 5 is a diagram showing an example of the non-application setting information 181.

As shown in FIG. 5, the non-application setting information 181 indicates the setting that is not applied in the specific execution state of processing by the MFP 10 for each specific execution state of processing by the MFP 10. Here, the execution state includes, for example, the state where the number of images based on the data that exists in the external storage medium connected to the connection interface 17 and can be printed by the printer 13 is one, the state in which the number of images read from the document by the scanner 14 is one, and the state where the number of images based on the private print data is one. For example, the non-application setting information 181 shown in FIG. 5 indicates "aggregation" and "double-sided" with respect to the state where the number of images based on the data that exists in the external storage medium connected to the connection interface 17 and can be printed by the printer 13 is one, the state in which the number of images read from the document by the scanner 14 is one, and the state where the number of images based on the private print data is one.

As shown in FIG. 1, the storage unit 18 stores transmission history information 18m indicating an execution history of the "transmission" function. The transmission history information 18m is information in which the transmission date and time, the transmission destination, the user who instructed execution of transmission, and the department to which the user belongs are associated with each transmission. The control unit 19 adds the execution history of the "transmission" function to the transmission history information 18m each time the "transmission" function is executed.

The storage unit 18 stores application execution history information 18n indicating the execution history of an application. The application execution history information 18n is information in which the execution date and time, the executed application, and the type of the document processed in the execution of the application are associated with each execution of the application. That is, the application execution history information 18n constitutes corresponding application information indicating the application corresponding to the document type. The control unit 19 adds the execution history of the application to the application execution history information 18n each time the application is executed.

The storage unit 18 stores a home screen display program 18o for displaying the home screen. The home screen display program 18o may be installed in the MFP 10 at the MFP 10 manufacturing stage, additionally installed in the MFP 10 from an external storage medium such as USB memory, and additionally installed in the MFP 10 from the network.

The control unit 19 includes, for example, a central processing unit (CPU), a read only memory (ROM) that stores programs and various data, and a random access memory (RAM) that is a memory used as a work area for the CPU of the control unit 19. The CPU of the control unit 19 executes programs stored in the storage unit 18 or the programs stored in the ROM of the control unit 19.

The control unit 19 executes the home screen display program 18o to realize the home screen display unit 19a that displays the home screen 20 (see FIG. 2) on the display unit 12.

Next, the operation of the MFP 10 will be described.

First, the operation of the MFP 10 when updating the extension application information 18j will be described.

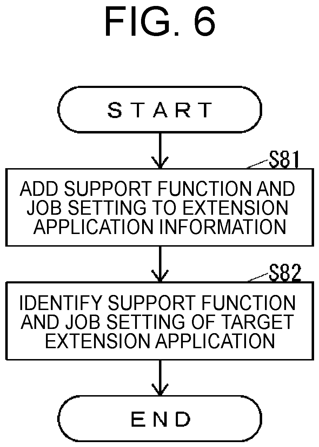

FIG. 6 is a flowchart of the operation of the MFP 10 when the extension application information 18j is updated.

After the extension application stored in the storage unit 18 is validated, the control unit 19 executes the operation shown in FIG. 6 when the extension application is executed for the first time (hereinafter referred to as "target extension application").

As shown in FIG. 6, the control unit 19 identifies the support function and job setting of the target extension application based on the result of executing the target extension application (S81).

Then, the control unit 19 adds the support function and job setting specified in S81 for the target extension application to the extension application information 18j (S82), and ends the operation shown in FIG. 6.

Next, the operation of the MFP 10 when changing to whether the authentication function is valid or invalid is explained.

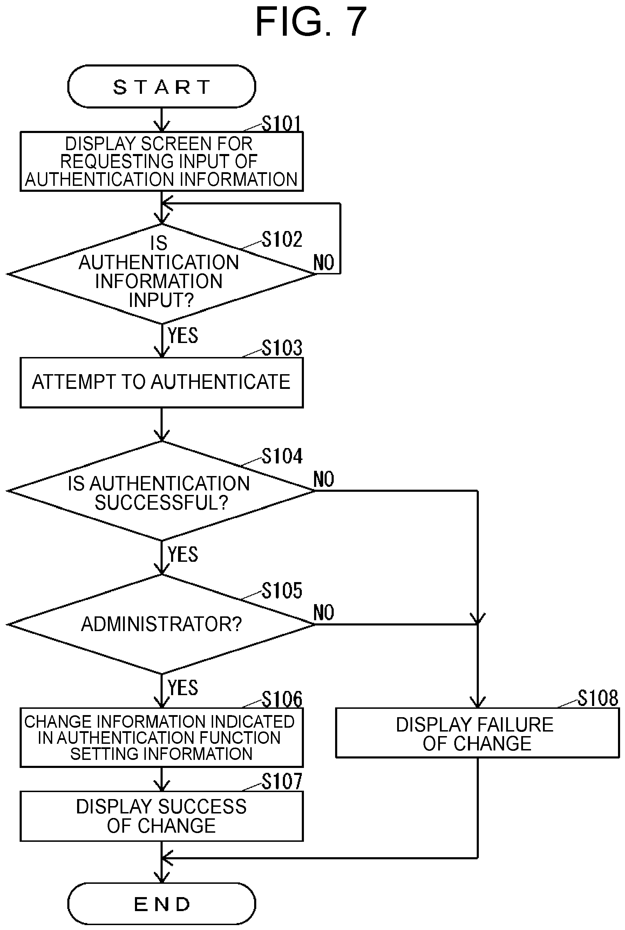

FIG. 7 is a flowchart of the MFP 10 operation when changing to whether the authentication function is valid or invalid.

When an instruction to change to whether the authentication function is valid or invalid is input via the operation unit 11, the control unit 19 performs the operation shown in FIG. 7.

As shown in FIG. 7, the control unit 19 displays a screen for requesting input of user authentication information on the display unit 12 (S101).

Then, the control unit 19 determines whether the authentication information is input via the operation unit 11 until the control unit 19 determines that the authentication information has been input via the operation unit 11 (S102).

When the control unit 19 determines in S102 that the authentication information has been input via the operation unit 11, the control unit 19 attempts to authenticate the user based on the authentication information determined as "input" in S102 and the authentication information included in the authentication information list 18a (S103).

Then, the control unit 19 determines whether the authentication in S103 is successful (S104).

When the control unit 19 determines in S104 that the authentication in S103 is successful, the control unit 19 determines whether the user is an administrator based on the identification information of the user authenticated in S103 and the authority information list 18b (S105).

When the control unit 19 determines in S105 that the user is the administrator, the control unit 19 changes the information indicated in the authentication function setting information 18c (S106). That is, when the authentication function setting information 18c indicates that the authentication function is valid, the control unit 19 changes the information indicated in the authentication function setting information 18c to information that the authentication function is not valid. Further, when the authentication function setting information 18c indicates that the authentication function is not valid, the control unit 19 changes the information indicated in the authentication function setting information 18c to information that the authentication function is valid.

After the process of S106, the control unit 19 displays on the display unit 12 that the change to either the authentication function is valid or invalid is successful (S107).

When the control unit 19 determines in S104 that the authentication in S103 is not successful or determines in S105 that the user is not the administrator, the control unit 19 displays on the display unit 12 that the change to either the authentication function is valid or invalid is unsuccessful (S108).

The control unit 19 ends the operation shown in FIG. 7 after the processing of S107 or S108.

Next, the operation of the MFP 10 when a user logs in will be explained.

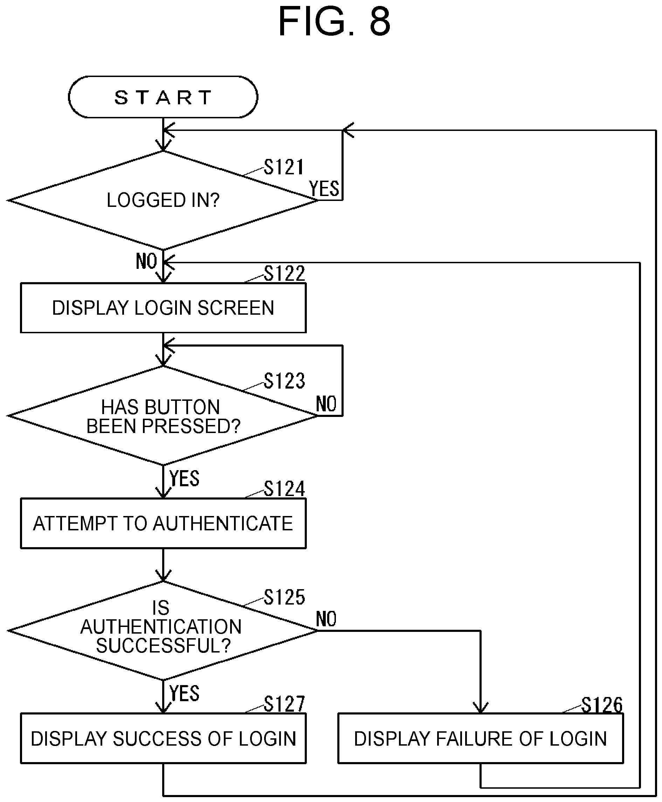

FIG. 8 is a flowchart of the operation of the MFP 10 when the user logs in.

When the authentication function setting information 18c indicates that the authentication function is valid, the control unit 19 performs the operation illustrated in FIG. 8.

As shown in FIG. 8, the control unit 19 determines whether the user has logged in until the control unit 19 determines that the user has not logged in (S121).

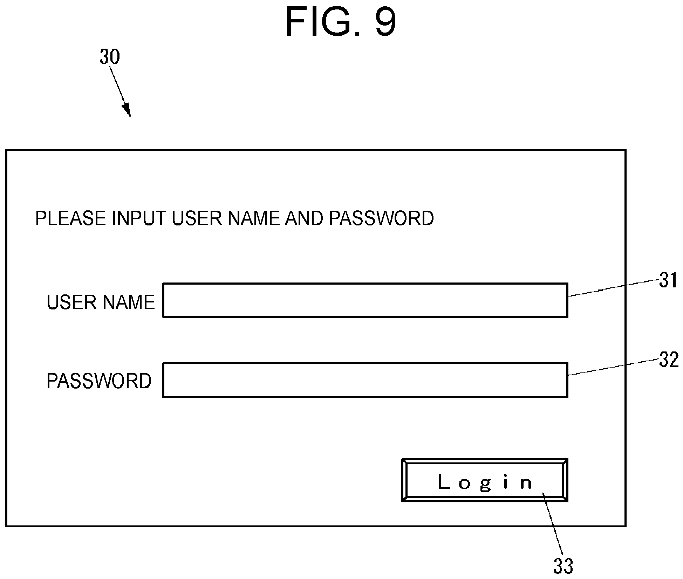

When the control unit 19 determines in S121 that the user has not logged in, the control unit 19 displays a login screen 30 (see FIG. 9) for a user to login in the display unit 12 (S122).

FIG. 9 is a diagram showing an example of the login screen 30.

The login screen 30 shown in FIG. 9 includes a text box 31 for inputting a user name as user identification information, a text box 32 for entering the user's password, and a button 33 where the login instruction is input.

As shown in FIG. 8, after the process of S122, the control unit 19 determines whether the button 33 has been pressed until the control unit 19 determines that the button 33 has been pressed (S123).

When the control unit 19 determines in S123 that the button 33 has been pressed, the control unit 19 attempts to authenticate the user based on the identification information stored in the text box 31 at the time when the control unit 19 determines in S123 that the button 33 has been pressed, the password stored in text box 32 at the time when the control unit 19 determines in S123 that button 33 has been pressed, and the authentication information in the authentication information list 18a (S124).

Then, the control unit 19 determines whether the authentication in S124 is successful (S125).

When the control unit 19 determines in S125 that the authentication in S124 is not successful, the control unit 19 displays the failure of the login on the display unit 12 (S126), and executes the process of S122.

When the control unit 19 determines in S125 that the authentication in S124 is successful, the control unit 19 displays the success of the login on the display unit 12 (S127), and executes the process in S121.

Next, the operation of the MFP 10 for displaying the home screen on the display unit 12 when the authentication function is valid and the user has already logged in will be explained.

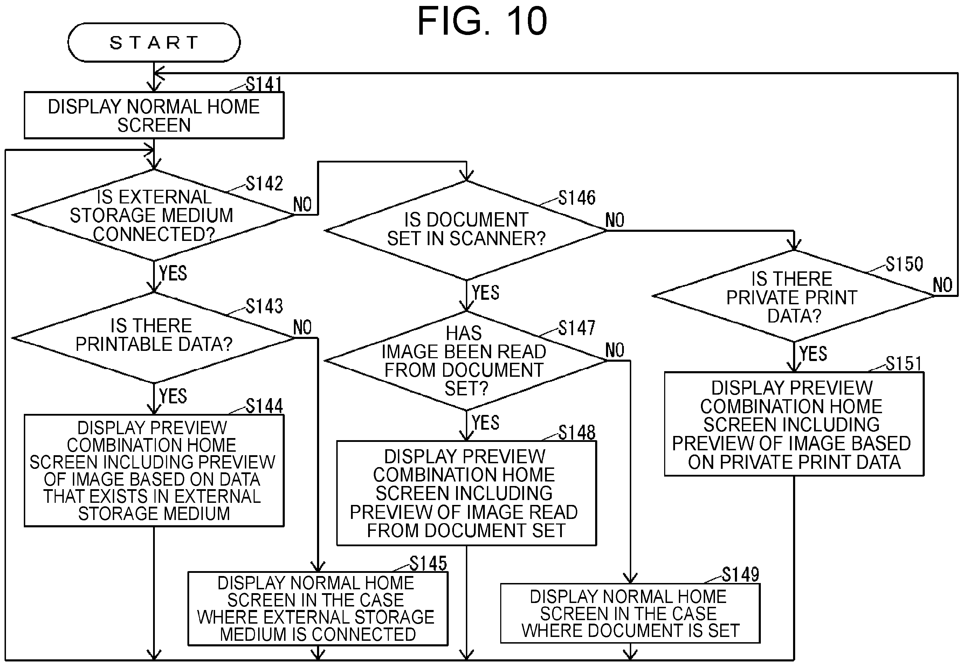

FIG. 10 is a flowchart of the operation of the MFP 10 for displaying the home screen on the display unit 12 when the authentication function is valid and the user has logged in.

When the authentication function setting information 18c indicates that the authentication function is valid and the user has logged in, the control unit 19 performs the operation shown in FIG. 10.

As shown in FIG. 10, the home screen display unit 19a displays the normal home screen on the display unit 12 (S141). The home screen display unit 19a adopts the default icon as the icon for the home screen displayed in S141.

Then, the home screen display unit 19a determines whether an external storage medium is connected to the connection interface 17 (S142).

When the home screen display unit 19a determines in S142 that an external storage medium is connected to the connection interface 17, the home screen display unit 19a determines whether there is data printable by the printer 13, such as image data, in the external storage medium connected to the connection interface 17 (S143).

When the home screen display unit 19a determines in S143 that there is data printable by the printer 13 on the external storage medium connected to the connection interface 17, the home screen display unit 19a displays on the display unit 12 the preview combination home screen including a preview of an image based on the data that exists in the external storage medium connected to the connection interface 17 and can be printed by the printer 13 (S144).

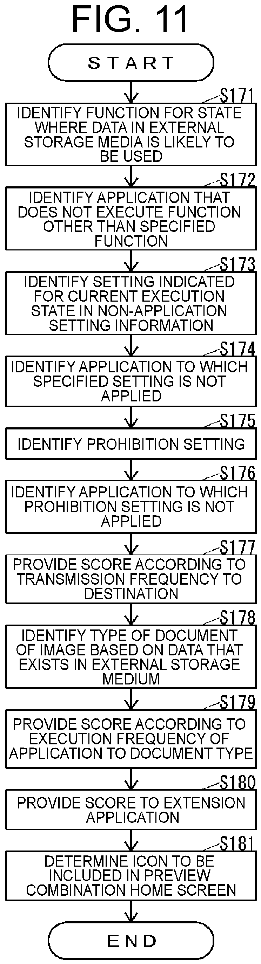

FIG. 11 is a flowchart of the operation of the MFP 10 for determining the icons to be included in the preview combination home screen including the preview of the image based on data that exists in the external storage medium when the user has logged in.

As shown in FIG. 11, the home screen display unit 19a identifies the function indicated in the corresponding function information 18k for the current state of the MFP 10, that is, the state where data in the external storage medium is likely to be used (S171).

Then, the home screen display unit 19a identifies the applications that do not execute functions other than the function specified in S171 based on the standard application information 18h and the extension application information 18j, among all the standard applications stored in the storage unit 18 and all the extension applications stored in the storage unit 18 (S172).

Then, the home screen display unit 19a identifies the setting indicated for the current execution state in the non-application setting information 181 (S173).

Then, the home screen display unit 19a identifies the applications to which the setting specified in S173 is not applied, based on the standard application information 18h and the extension application information 18j, among the applications specified in S172 (S174).

Then, the home screen display unit 19a identifies the prohibition setting indicated in the prohibition setting information 18e for either the logged-in user and the department to which the user belongs (S175). The home screen display unit 19a identifies the department to which the logged-in user belongs in the department list 18d.

The home screen display unit 19a identifies the applications to which the prohibition setting specified in S175 is not applied, based on the standard application information 18h and the extension application information 18j, among the applications specified in S174 after the processing of S175 (S176).

Then, the home screen display unit 19a gives a score to the application where the "destination" setting is applied, among the applications identified in S176, according to the transmission frequency to the "destination" in the specific period immediately before by the department to which the logged-in user belongs (S177). Here, the home screen display unit 19a calculates the transmission frequency in the specific period immediately before by the department to which the logged-in user belongs based on the transmission history information 18m. Also, the home screen display unit 19a gives the score so that the greater the score to be given, the higher the transmission frequency.

The home screen display unit 19a identifies the type of the document of the image based on the data that exists in the external storage medium connected to the connection interface 17 and can be printed by the printer 13 after the processing of S177 (S178). Here, the home screen display unit 19a may identify the type of the document by, for example, analyzing the text obtained by performing optical character recognition (OCR) processing using a specific algorithm.

After the process of S178, the home screen display unit 19a gives a score to each of the applications specified in S176 according to the execution frequency in the specific period immediately before to the document type specified in S178 (S179). Here, the home screen display unit 19a calculates the execution frequency of the application in the specific period immediately before to the document type specified in S178 based on the application execution history information 18n. Also, the home screen display unit 19a gives a score so that the greater the score to be given, the higher the execution frequency of the application.

The home screen display unit 19a gives a specific score to the extension application among the applications specified in S176 after the process of S179 (S180).

After processing S180, the home screen display unit 19a determines the icons to be included in the preview combination home screen displayed in S144 in the order of the application in which the total score given in S177, S179 and S180 is large (S181), and then ends the operation shown in FIG. 11.

As shown in FIG. 10, the home screen display unit 19a executes the process of S142 after the process of S144.

When the home screen display unit 19a determines in S143 that there is no data printable by the printer 13 on the external storage medium connected to the connection interface 17, the home screen display unit 19a displays on the display unit 12 the normal home screen in the case where the external storage medium is connected to the connection interface 17 (S145).

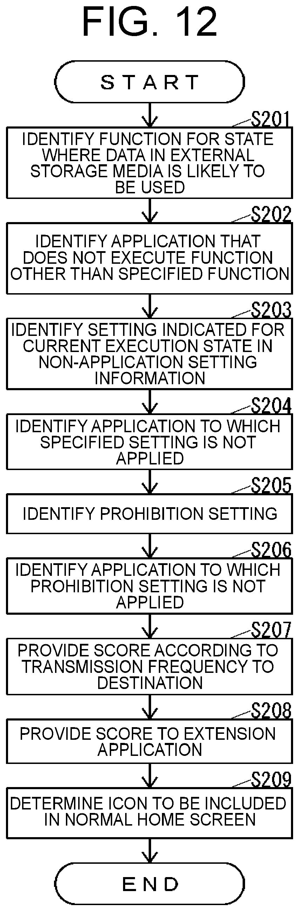

FIG. 12 is a flowchart of the operation of the MFP 10 for determining the icons to be included in the normal home screen in the case where the user has logged in and the external storage medium is connected to the connection interface 17.

As shown in FIG. 12, the home screen display unit 19a executes the processing of S201 to S207 similar to S171 to S177.

The home screen display unit 19a executes the process of S208 similar to S180 after the process of S207.

After the processing of S208, the home screen display unit 19a determines the icons to be included in the normal home screen displayed in S145 in the order of application in which the total score given in S207 and S208 is large (S209), and then ends the operation shown in FIG. 12.

As shown in FIG. 10, the home screen display unit 19a executes the process of S142 after the process of S145.

When the home screen display unit 19a determines in S142 that no external storage medium is connected to the connection interface 17, the home screen display unit 19a determines whether a document is set in the scanner 14 (S146).

When the home screen display unit 19a determines in S146 that a document is set in the scanner 14, the home screen display unit 19a determines whether an image has been read by the scanner 14 from the document set in the scanner 14 (S147). The control unit 19 may be configured to automatically read an image from the document set in the scanner 14 by the scanner 14 when the document is set in the scanner 14. Alternatively, the control unit 19 may be configured to read an image from the document set on the scanner 14 by the scanner 14 in accordance with an instruction via the operation unit 11.

When the home screen display unit 19a determines in S147 that the image has been read by the scanner 14 from the document set in the scanner 14, the home screen display unit 19a displays on the display unit 12 the preview combination home screen including a preview of the image read by the scanner 14 from the document set on the scanner 14 (S148).

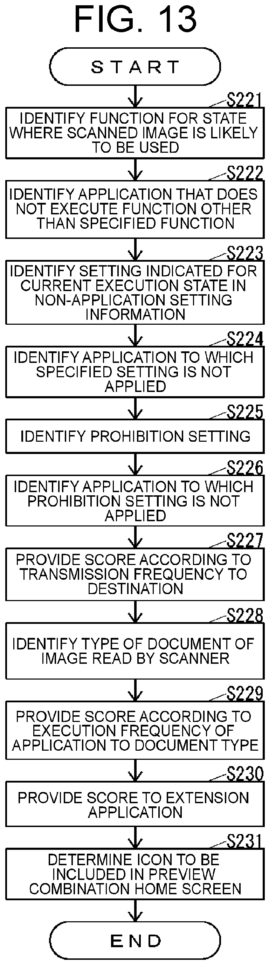

FIG. 13 is a flowchart of the operation of the MFP 10 for determining the icons to be included in the preview combination home screen including the preview of the image read by the scanner 14 when the user has logged in.

As shown in FIG. 13, the home screen display unit 19a identifies the function indicated in the corresponding function information 18k for the current state of the MFP 10, that is, the state where the scanned image is likely to be used (S221).

Then, the home screen display unit 19a executes the processing of S222 to S227 similar to the processing of S172 to S177.

The home screen display unit 19a identifies the type of the document of the image read by the scanner 14 after the processing of S227 (S228). Here, the home screen display unit 19a may identify the type of the document by, for example, analyzing the text obtained by performing the OCR processing using a specific algorithm.

The home screen display unit 19a executes the processing of S229 to S230 similar to the processing of S179 to S180 after the processing of S228.

After processing S230, the home screen display unit 19a determines the icons to be included in the preview combination home screen displayed in S148 in the order of application in which the total score given in S227, S229 and S230 is large (S231), and then ends the operation shown in FIG. 13.

As shown in FIG. 10, the home screen display unit 19a executes the process of S142 after the process of S148.

When the home screen display unit 19a determines in S147 that the image has not read by the scanner 14 from the document set in the scanner 14, the home screen display unit 19a displays the normal home screen on the display unit 12 in the case where the document is set in the scanner 14 (S149).

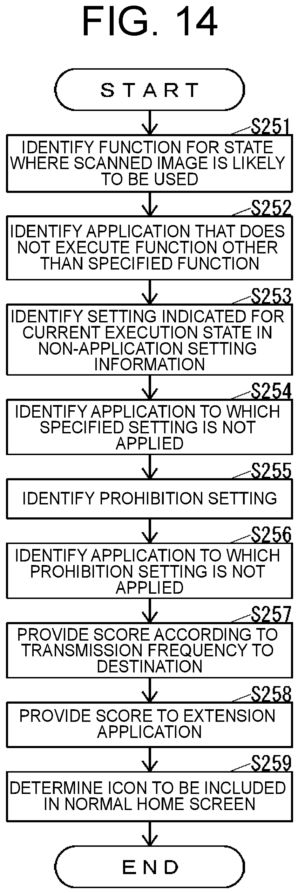

FIG. 14 is a flowchart of the operation of the MFP 10 for determining the icons to be included in the normal home screen in the case where the user has logged in and the document is set in the scanner 14.

As shown in FIG. 14, the home screen display unit 19a executes the processing of S251 to S257 similar to S221 to S227.

The home screen display unit 19a executes the process of S258 similar to S230 after the process of S257.

After processing S258, the home screen display unit 19a determines the icons to be included in the normal home screen displayed in S149 in the order of application in which the total score given in S257 and S258 is large (S259), and then ends the operation shown in FIG. 14.

As shown in FIG. 10, the home screen display unit 19a executes the process of S142 after the process of S149.

When the home screen display unit 19a determines in S146 that no document is set in the scanner 14, the home screen display unit 19a determines whether private print data exists in the document box of the logged-in user (S150).

When the home screen display unit 19a determines in S150 that private print data exists in the document box of the logged-in user, the home screen display unit 19a displays on the display unit 12 the preview combination home screen including a preview of an image based on the private print data that exists in the document box of the logged-in user (S151).

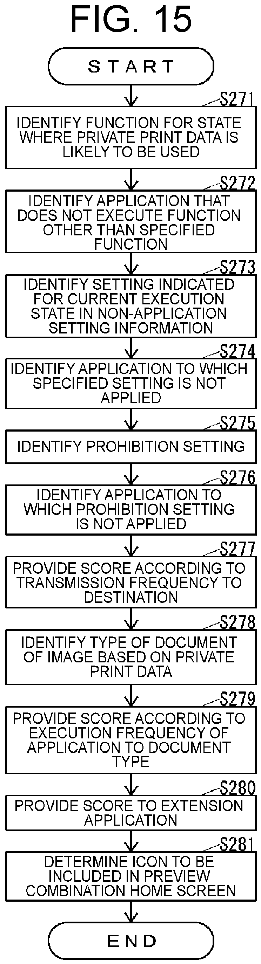

FIG. 15 is a flowchart of the operation of the MFP 10 for determining the icons to be included in the preview combination home screen including the preview of the image based on the private print data that exists in the document box of the logged-in user when the user has logged in.

As shown in FIG. 15, the home screen display unit 19a identifies the function indicated in the corresponding function information 18k for the current state of the MFP 10, that is, the state where the private print data is likely to be used (S271).

Then, the home screen display unit 19a executes the processing of S272 to S277 similar to the processing of S172 to S177.

The home screen display unit 19a identifies the type of the document of the image based on the private print data that exists in the document box of the logged-in user after the processing of S277 (S278). Here, the home screen display unit 19a may identify the type of the document by, for example, analyzing the text obtained by performing the OCR processing using a specific algorithm.

The home screen display unit 19a executes the processing of S279 to S280 similar to the processing of S179 to S180 after the processing of S278.

After processing S280, the home screen display unit 19a determines the icons to be included in the preview combination home screen displayed in S151 in the order of application in which the total score given in S277, S279 and S280 is large (S281), and then ends the operation shown in FIG. 15.

As shown in FIG. 10, the home screen display unit 19a executes the process of S142 after the process of S151.

When the home screen display unit 19a determines in S150 that there is no private print data in the document box of the logged-in user, the home screen display unit 19a executes the process of S141.

Next, the operation of the MFP 10 for displaying the home screen on the display unit 12 when the authentication function is not valid will be described.

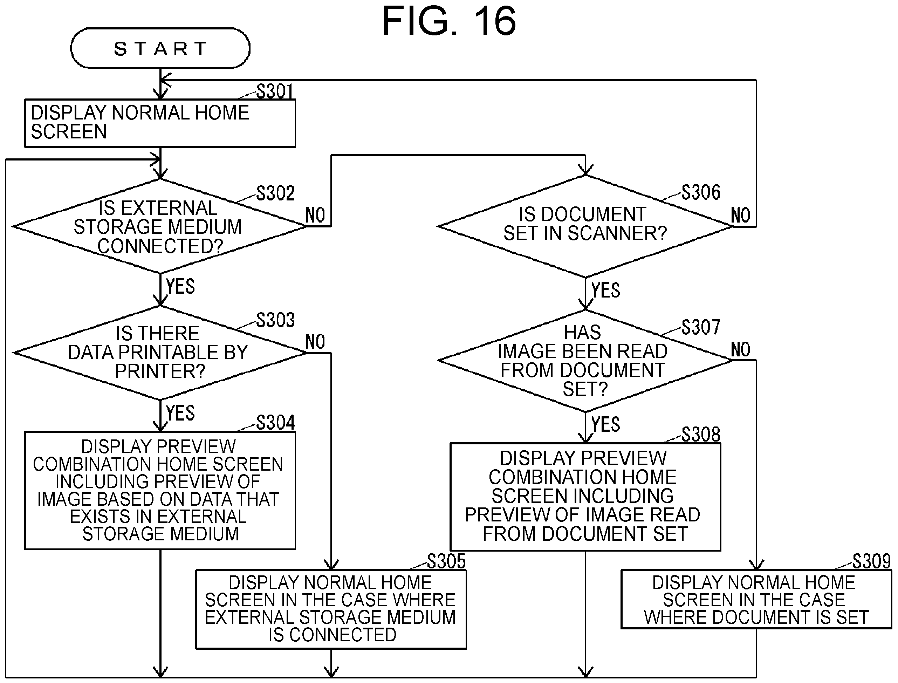

FIG. 16 is a flowchart of the operation of the MFP 10 for displaying the home screen on the display unit 12 when the authentication function is not valid.

When the authentication function setting information 18c indicates that the authentication function is not valid, the control unit 19 performs the operation illustrated in FIG. 16.

As shown in FIG. 16, the home screen display unit 19a executes the processing of S301 to S303 similar to the processing of S141 to S143.

When the home screen display unit 19a determines in S303 that there is data printable by the printer 13 on the external storage medium connected to the connection interface 17, the home screen display unit 19a displays on the display unit 12 the preview combination home screen including a preview of an image based on the data that exists in the external storage medium connected to the connection interface 17 and can be printed by the printer 13 (S304).

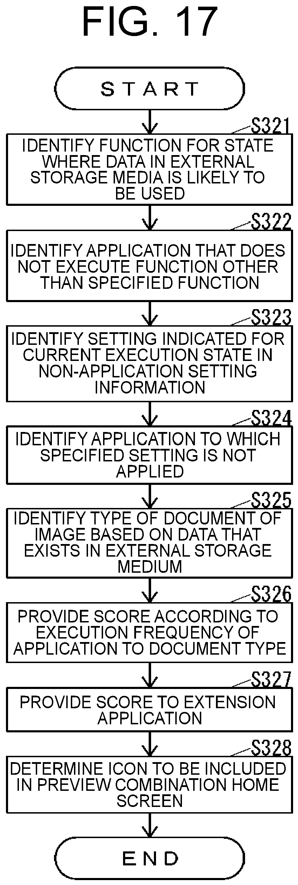

FIG. 17 is a flowchart of the operation of the MFP 10 for determining the icons to be included in the preview combination home screen including the preview of the image based on the data that exists in the external storage medium when the authentication function is not valid.

As shown in FIG. 17, the home screen display unit 19a executes the processing of S321 to S324 similar to the processing of S171 to S174.

Then, the home screen display unit 19a executes the process of S325 similar to the process of S178.

Then, regarding the applications identified in S324, the home screen display unit 19a gives scores according to the execution frequency in the specific period immediately before to the type of the document specified in S325, similarly to the processing in S179 (S326).

Then, the home screen display unit 19a executes the process of S327 similar to the process of S180.

Then, the home screen display unit 19a determines the icons to be included in the preview combination home screen displayed in S304 in the order of application in which the total score given in S326 and S327 is large (S328), and then ends the operation shown in FIG. 17.

As shown in FIG. 16, the home screen display unit 19a executes the process of S302 after the process of S304.

When the home screen display unit 19a determines in S303 that there is no data printable by the printer 13 on the external storage medium connected to the connection interface 17, the home screen display unit 19a displays the normal home screen on the display unit 12 in the case where the external storage medium is connected to the connection interface 17 (S305).

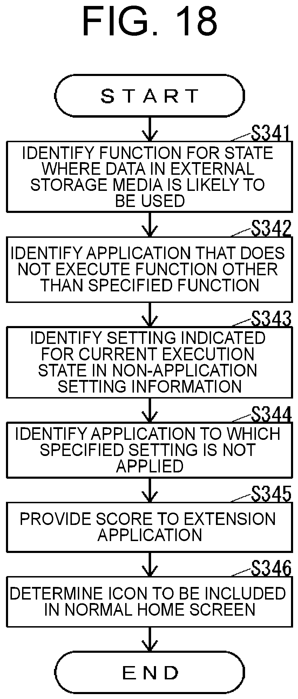

FIG. 18 is a flowchart of the operation of the MFP 10 for determining the icons to be included in the normal home screen when the authentication function is not valid and the external storage medium is connected to the connection interface 17.

As shown in FIG. 18, the home screen display unit 19a executes the processing of S341 to S344 similar to S321 to S324.

Then, the home screen display unit 19a executes the process of S345 similar to the process of S327.

After processing S345, the home screen display unit 19a determines the icons to be included in the normal home screen displayed in S305 in the order of application in which the score given in S345 is large (S346), and ends the operation shown in FIG. 18.

As shown in FIG. 16, the home screen display unit 19a executes the process of S302 after the process of S305.

When the home screen display unit 19a determines in S302 that no external storage medium is connected to the connection interface 17, the home screen display unit 19a executes the processing of S306 to S307 similar to the processing of S146 to S147.

When the home screen display unit 19a determines in S307 that an image has been read by the scanner 14 from the document set in the scanner 14, the home screen display unit 19a displays on the display unit 12 the preview combination home screen including a preview of the image read by the scanner 14 from the document set in the scanner 14 (S308).

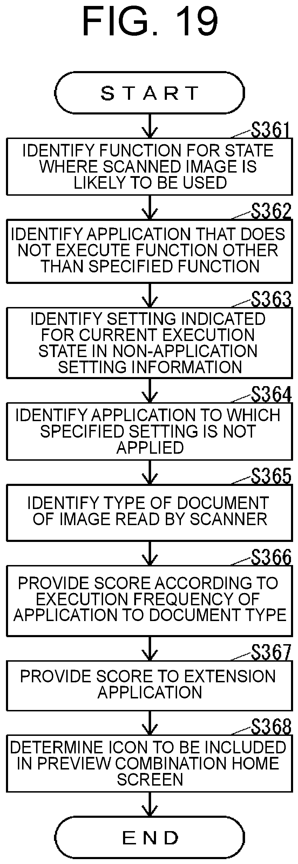

FIG. 19 is a flowchart of the operation of the MFP 10 for determining the icons to be included in the preview combination home screen including the preview of the image read by the scanner 14 when the authentication function is not valid.

As shown in FIG. 19, the home screen display unit 19a executes the processing of S361 to S364 similar to the processing of S221 to S224.

Then, the home screen display unit 19a executes the process of S365 similar to the process of S228.

Then, regarding the applications identified in S364, as with S229, the home screen display unit 19a gives scores according to the execution frequency in the specific period immediately before to the type of the document type specified in S365 (S366).

Then, the home screen display unit 19a executes the process of S367 similar to the process of S230.

Then, the home screen display unit 19a determines the icons to be included in the preview combination home screen displayed in S308 in order of application in which the total score given in S366 and S367 is large (S368), and then ends the operation shown in FIG. 19.

As shown in FIG. 16, the home screen display unit 19a executes the process of S302 after the process of S308.

When the home screen display unit 19a determines in S307 that no image has not read by the scanner 14 from the document set in the scanner 14, the home screen display unit 19a displays the normal home screen on the display unit 12 in the case where the document is set in the scanner 14 (S309).

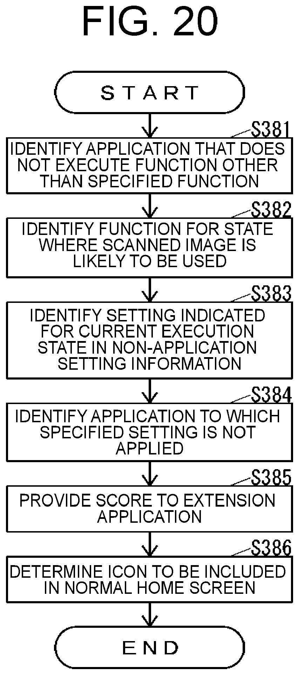

FIG. 20 is a flowchart of the operation of the MFP 10 for determining the icons to be included in the normal home screen when the authentication function is not valid and the document is set in the scanner 14.

As shown in FIG. 20, the home screen display unit 19a executes the processing of S381 to S384 similar to S361 to S364.

Then, the home screen display unit 19a executes the process of S385 similar to the process of S367.

After processing S385, the home screen display unit 19a determines the icons to be included in the normal home screen displayed in S309 according to a specific rule in the order of application with the score given in S385 is large (S386), and then ends the operation shown in FIG. 20.

As shown in FIG. 16, the home screen display unit 19a executes the process of S302 after the process of S309.

When the home screen display unit 19a determines in S306 that no document is set in the scanner 14, the home screen display unit 19a executes the process of S301.

As explained above, the MFP 10 does not include in the home screen the icon corresponding to the application shown in the standard application information 18h and the extension application information 18j which indicate that a function other than the function associated with the current state of the MFP 10 in the corresponding function information 18k is executed ("S172 and S181", "S202 and S209", "S222 and S231", "S252 and 259", "S272 and S281", "S322 and S328", "S342 and S346", "S362 and S368", or "S382 and S386"). Therefore, the icon that is expected to be used infrequently because of inappropriateness to the current state of the MFP 10 can be excluded from the home screen, and the usability of the home screen can be improved.

The MFP 10 does not include in the home screen the icon corresponding to the application shown in the standard application information 18h and the extension application information 18j which indicate that the setting associated with the current execution state of the processing by the MFP 10 in the non-application setting information 181 is applied ("S174 and S181", "S204 and S209", "S224 and S231", "S254 and 259", "S274 and S281", "S324 and S328", "S344 and S346", "S364 and S368", or "S384 and S386"). Therefore, the icon that is expected to be used infrequently because of inappropriateness to the current execution state of the processing of the MFP 10 can be excluded from the home screen, and the usability of the home screen can be improved.

The MFP 10 does not include in the home screen the icon corresponding to the application shown in the standard application information 18h and the extension application information 18j which indicate that the prohibition setting shown in the prohibition setting information 18e is applied ("S176 and S181", "S206 and S209", "S226 and S231", "S256 and 259", or "S276 and S281"). Therefore, an unusable application icon can be excluded from the home screen, and the usability of the home screen can be improved.

The MFP 10 preferentially includes in the home screen the icon corresponding to the application shown in the standard application information 18h and the extension application information 18j which indicate that the destination whose transmission frequency is higher than the specific transmission frequency is applied over the icon corresponding to the application shown in the standard application information 18h and the extension application information 18j which indicate that the destination whose transmission frequency is less than the specific transmission frequency is applied ("S177 and S181", "S207 and S209", "S227 and S231", "S257 and 259", or "S277 and S281"). Therefore, the icon that is expected to be used frequently can be preferentially included in the home screen. Therefore, the usability of the home screen can be improved.

The extension application is likely to be an application conforming to the user's business, and is expected to be used more frequently compared to the standard application. The MFP 10 preferentially includes the icon corresponding to the extension application in the home screen over the icon corresponding to the standard application ("S180 and S181", "S208 and S209", "S230 and S231", "S258 and 259", "S280 and S281", "S327 and S328", "S345 and S346", "S367 and S368", or "S385 and S386"). Therefore, the icon that is expected to be used frequently can be preferentially included in the home screen, and the usability of the home screen can be improved.

The MFP 10 identifies the type of the document to be processed (S178, S228, S278, S325 or S365), and preferentially includes in the home screen the icon corresponding to the application associated with the type specified in the application execution history information 18n as the corresponding application information ("S179 and S181", "S229 and S231", "S279 and S281", "S326 and S328", or "S366 and S368"). Therefore, the icon that is expected to be used frequently because of high conformity to the type of the document to be processed can be preferentially included in the home screen. Therefore, the usability of the home screen can be improved. For example, if the MFP 10 processes a document that contains the word "confidential", the MFP 10 can include the icon corresponding to the extension application that gives a security watermark when the document is output.

The MFP 10 identifies the type of the document to be processed (S178, S228, S278, S325 or S365), and preferentially includes in the home screen the icon corresponding to the application whose execution frequency is higher than the specific execution frequency over the icon corresponding to the application whose execution frequency is less than the specific execution frequency, among the applications that are associated with the type specified in the application execution history information 18n as the corresponding application information ("S179 and S181", "S229 and S231", "S279 and S281", "S326 and S328", or "S366 and S368"). Therefore, the icon that is expected to be used frequently can be preferentially included in the home screen. Therefore, the usability of the home screen can be improved.

Note that the corresponding application information does not necessarily need to be the application execution history information 18n, and may simply indicate the application corresponding to the document type.

When the extension application stored in the storage unit 18 is validated and the extension application is executed for the first time, the MFP 10 automatically adds the support function and job setting to the extension application information 18j for the target extension application (S82). However, for example, when the extension application is validated, the MFP 10 may have a configuration in which the support function and job setting are manually added to the extension application information 18j for the target extension application.

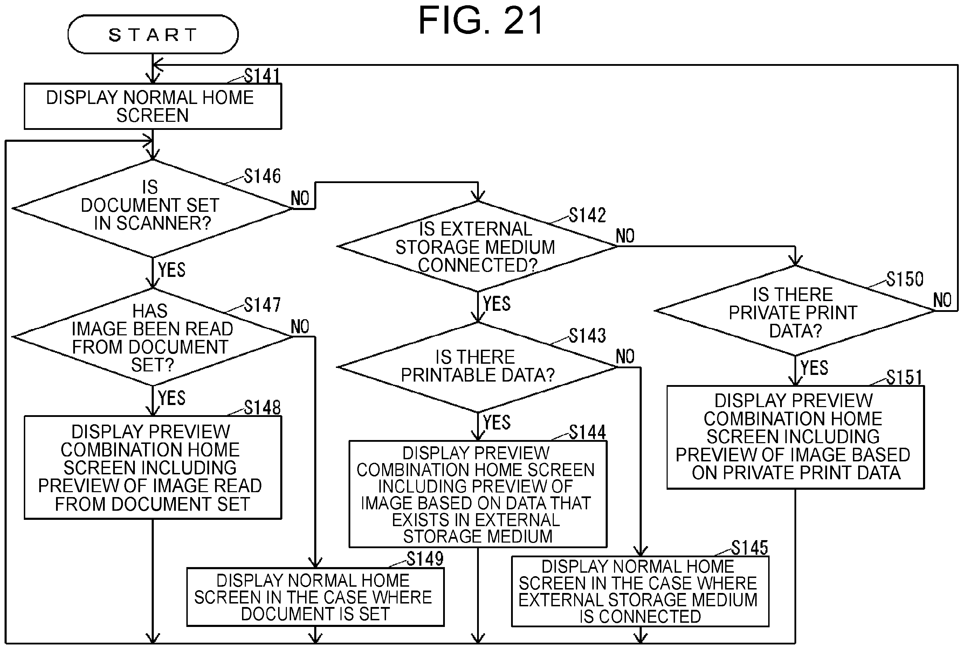

In the operation shown in FIG. 10, in displaying the home screen on the display unit 12 in the case where the authentication function is valid and the user has logged in, the MFP 10 has priority over that the external storage medium is connected to the connection interface 17 over that the document is set in the scanner 14. However, as shown in FIG. 21, in displaying the home screen on the display unit 12 in the case where the authentication function is valid and the user has logged in, the MFP 10 may prioritize that the document is set on the scanner 14, over that the external storage medium is connected to the connection interface 17.

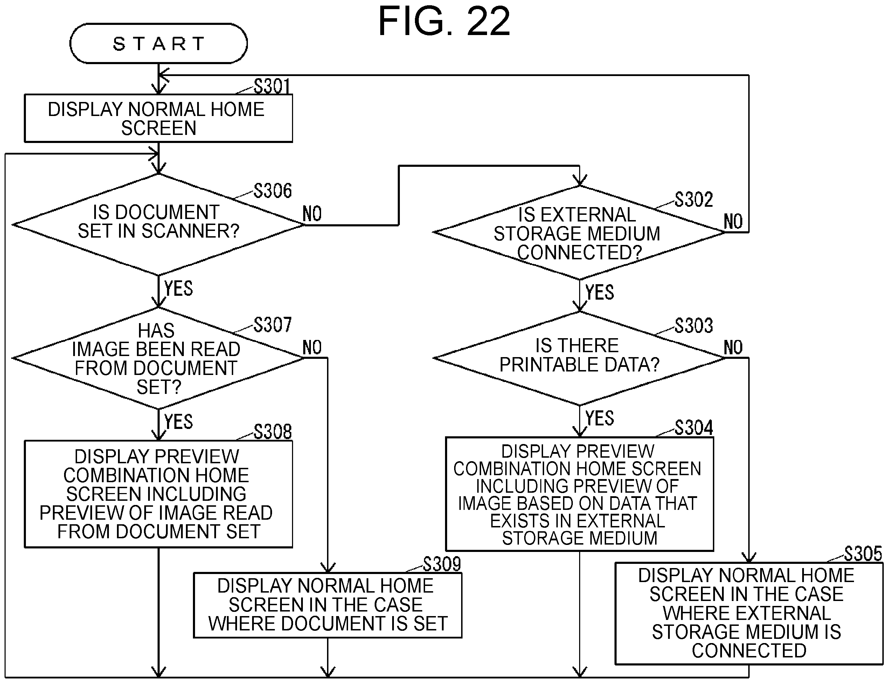

In the operation shown in FIG. 16, when the authentication function is not valid, the MFP 10 has priority over that the external storage medium is connected to the connection interface 17 over that the document is set in the scanner 14. However, as shown in FIG. 22, when the authentication function is not valid, the MFP 10 may prioritize that the document is set on the scanner 14 over that the external storage medium is connected to the connection interface 17.

In the embodiment, the MFP 10 stores the authentication information list 18a. However, the MFP 10 may use the authentication information list managed by an external computer. Further, the MFP 10 may request an external computer for the processing of the user authentication.

In the embodiment, the MFP 10 stores the authority information list 18b. However, the MFP 10 may use an authority information list managed by an external computer. Further, the MFP 10 may request an external computer for the processing to confirm the user's authority.

The MFP 10 includes the document box in the embodiment. However, the document box may be provided in a computer outside the MFP 10.

The image forming apparatus of the present disclosure is the MFP in the present embodiment, but may be an image forming apparatus other than the MFP, such as a printer dedicated machine.

### Description of the Code

10 Multifunction Peripheral (MFP) (image forming apparatus)
12 display unit (display device)
18e prohibition setting information
18g standard application (application)
18h standard application information (application information)
18i extension application (application)
18j extension application information (application information)
18k corresponding function information
181 non-application setting information
18n application execution history information (corresponding application information)
18o home screen display program
19a home screen display unit
20 home screen
21 icon

## Claims

1. An image forming apparatus comprising:
a display device (12) that displays information; and
a plurality of applications (18g, 18i);
**characterized in that**
application information (18h, 18j) includes a plurality of functions each executed when the plurality of applications is executed;
corresponding function information (18k) that indicates the function corresponding to a state of the image forming apparatus; and
a home screen display unit (19a) that displays a home screen (20) includes an icon (21) for executing the applications,
wherein the home screen display unit does not comprise in the home screen the icon corresponding to the application among the plurality of applications shown in the application information which indicates that a function among the plurality of functions other than the function among the plurality of functions associated with a current state of the image forming apparatus in the corresponding function information is executed.

2. The image forming apparatus according to claim 1,
wherein the application information includes a plurality of settings each of which is applied when the functions is executed,
wherein the image forming apparatus further comprises non-application setting information (181) that indicates, for each execution state of processing by the image forming apparatus, a setting among the plurality of settings that is not applied in a specific execution state of processing by the image forming apparatus, and
wherein the home screen display unit does not comprise in the home screen the icon corresponding to the application shown in the application information which indicates that the setting among the plurality of settings associated with a current execution state of the processing by the image forming apparatus in the non-application setting information is applied.

3. The image forming apparatus according to claim 1,
wherein the application information includes, a plurality of settings each of which is applied when the function among the plurality of functions is executed,
wherein the image forming apparatus further comprises prohibition setting information (18e) that indicates prohibition setting as setting prohibited, and
wherein the home screen display unit does not comprise in the home screen the icon corresponding to the application shown in the application information which indicates that the prohibition setting indicated in the prohibition setting information is applied.

4. The image forming apparatus according to claim 1,
wherein the application information includes a plurality of settings each of which is applied when the function among the plurality of functions is executed,
wherein the settings include a destination that is applied when a transmission function as one of the plurality of functions is executed, and
wherein the home screen display unit preferentially comprises in the home screen the icon corresponding to the application shown in the application information which indicates that the destination whose transmission frequency is higher than a specific transmission frequency is applied, over the icon corresponding to the application shown in the application information which indicates that the destination whose transmission frequency is less than or equal to the specific transmission frequency is applied.

5. The image forming apparatus according to any one of claims 1 to 4,
wherein the plurality of applications comprises a standard application (18g) as the applications that executes at least one of the plurality of functions, and an extension application (18i) as the applications that extends at least one of the plurality of functions, and
wherein the home screen display unit comprises the icon corresponding to the extension application in the home screen with priority over the icon corresponding to the standard application.

6. The image forming apparatus according to any one of claims 1 to 5,
wherein the image forming apparatus further comprises corresponding application information (18n) that indicates at least one application among the plurality of applications corresponding to a type of a document, and
wherein the home screen display unit identifies the type of the document to be processed, and preferentially comprises in the home screen the icon corresponding to the at least one application among the plurality of applications associated with the identified type in the corresponding application information.

7. The image forming apparatus according to claim 6,
wherein the home screen display unit preferentially comprises in the home screen the icon corresponding to the application whose execution frequency is higher than a specific execution frequency with priority over the icon corresponding to the application whose execution frequency is equal to or lower than the specific execution frequency, among the applications associated with the identified type in the corresponding application information.

8. A home screen display program (18o) executed by an image forming apparatus (10), the image forming apparatus comprising:
a display device (12) that displays information; and
a plurality of applications (18g, 18i);
**characterized in that**
application information (18h, 18j) includes a plurality of functions each executed when the plurality of applications is executed; and
corresponding function information (18k) that indicates a function corresponding to a state of the image forming apparatus,
wherein the home screen display program realizes in the image forming apparatus a home screen display unit (18a) that displays a home screen comprising an icon (21) for executing the applications on the display device, and
wherein the home screen display unit does not comprise in the home screen the icon corresponding to the application among the plurality of applications shown in the application information which indicates that a function among the plurality of functions other than the function among the plurality of functions associated with a current state of the image forming apparatus in the corresponding function information is executed.
